# EUROPÄISCHE PATENTANMELDUNG

(11) **EP 1 120 327 A1**
(43) Veröffentlichungstag der Anmeldung: **01.08.2001**
(21) Anmeldenummer: 00127137.8
(22) Anmeldetag: 12.12.2000
(51) Int. Cl.: B62B 9/10, A47D 13/02

(54) **Sitz- und/oder Liegeeinsatz**

(30) Priorität: 27.01.2000 DE 20001474 U
(71) Anmelder: BRITAX-TEUTONIA KINDERWAGENFABRIK GmbH, D-32120 Hiddenhausen (DE)
(72) Erfinder: Lüdeking, Günter, 32257 Bünde (DE); Ottlinger, Brigitte, 32278 Kirchlengern (DE)
(74) Vertreter: Dantz, Jan Henning

(57) **Zusammenfassung**

Ein Sitz- und/oder Liegeeinsatz, der mit einem Kopf- und einem Fußendbereich ausgestattet ist und für einen Kinderwagen ausgelegt ist, der zumindest ein Unterteil aufweist, soll so gestaltet werden, daß in kostengünstiger Weise die Anzahl der zu einer Garnitur für die Ausstattung eines Kinderwagens gehörenden Teile verringert wird. Erfindungsgemäß ist der Sitz- und/oder der Liegeeinsatz (11) im Fußteilbereich über eine definierte Fläche mit einer Oberlage (13) ausgestattet die lösbar durch einen oder durch mehrere Reißverschlüsse mit dem Unterteil (12) verbunden ist. Die Seitenkanten der Oberlage (13) mit den zugehörigen Seitenkanten des Unterteils (12) fallen zusammen oder sie fallen annähernd zusammen. Der Reißverschluß (14) ist innen und/oder außenseitig von je einer Wulst übergriffen.

Der Sitz- und/oder Liegeeinsatz (11) ist für alle Bauarten verwendbar.

## Beschreibung

Die Erfindung betrifft einen Sitz- und/oder Liegeeinsatz mit einem Kopf- und einem Fußendbereich für einen Kinderwagen, welcher zumindest ein Unterteil aufweist.

Ein Liegeeinsatz für einen Kinderwagen erstreckt sich im wesentlichen über die Länge und über die Breite des Kinderwageneinsatzes. Die Kinderwagen sind in vielen Ausführungen bekannt, so daß es auch möglich ist, den Kopfendbereich zu verschwenken, so daß das Kind sowohl im Einsatz sitzen als auch liegen kann. Damit das Kind im Kinderwagen nicht friert, enthält eine Kinderwagengarnitur auch Fußsäcke, die für winterliche und sommerliche Temperaturen gestaltet sind. Dieser Fußsack wird zusätzlich mit in den Sitz- bzw. Liegeeinsatz gelegt. Dadurch wird die Anzahl der zu einer Kinderwagengarnitur gehörenden Elemente erhöht und darüber hinaus wird auch die Garnitur verteuert.

Der Erfindung liegt die Aufgabe zugrunde, einen Sitz- und/oder Liegeeinsatz der eingangs näher beschriebenen Art so zu gestalten, daß in kostengünstiger Weise die Anzahl der zu einer Garnitur für die Ausstattung eines Kinderwagens gehörenden Teile verringert wird.

Die gestellte Aufgabe wird gelöst, indem der Sitz- und/oder der Liegeeinsatz im Fußteilbereich über eine definierte Fläche mit einer Oberlage ausgestattet ist, die mit dem Unterteil verbunden ist.

Es wird nunmehr ein Sitz- und/oder Liegeeinsatz mit einem sinngemäß integrierten Fußsack geschaffen, so daß in kostengünstiger Weise die Anzahl der zu einer Garnitur gehörenden Teile verringert wird. Die schützende Wirkung der Oberlage ist mit der eines Fußsackes ohne weiteres vergleichbar. Die Oberlage kann auch für sommerliche und winterliche Temperaturen gestaltet sein. Dazu ist es dann vorteilhaft, daß die Seitenkanten der Oberlage mit den zugehörigen Seitenkanten des Unterteils zusammenfallen oder annähernd zusammenfallen, da dann die volle Breite des Unterteils ausgenutzt wird. Damit das Oberteil an die herrschenden Temperaturen angepaßt werden kann, ist es zweckmäßig, daß die Seitenkanten der Oberlage mit den zugehörigen Seitenkanten des Unterteils lösbar miteinander verbunden sind. Dadurch wird das Wechseln besonders einfach. Diese lösbare Verbindung läßt sich einfach herstellen, wenn die Seitenkanten der Oberlage mit den Seitenkanten des Unterteils durch einen Reißverschluß oder durch mehrere Reißverschlüsse miteinander verbunden sind. Der Reißverschluß bzw. die Reißverschlüsse bilden dann eine durchgehende Verbindung, so daß keine offenen Stellen entstehen, durch die Kälte in das Innere zwischen dem Unterteil und der Oberlagen eindringen könnte. Zweckmäßigerweise sind die Reißverschlüsse an einer oder an beiden Seiten durch eine übergreifende Wulst abgedeckt, da dadurch Kältebrücken vermieden werden. Wenn diese Wulst an der Innenseite liegt, wird außerdem noch erreicht, daß sich das Kind verletzen kann. Das Unterteil und die Oberlage sollten so ausgelegt sein, daß in die dadurch begrenzte Tasche noch im Bedarfsfalle ein Fußsack eingesteckt werden kann. Dadurch wird insbesondere bei winterlichen Temperaturen ein ausreichender Schutz für das Kind erreicht.

Anhand der beiliegenden Zeichnungen wird die Erfindung noch näher erläutert. Es zeigen:
- Figur 1: einen in einen teilweise dargestellten Kinderwagen eingelegten erfindungsgemäßen Liegeeinsatz in einer perspektivischen Darstellung,
- Figur 2: den Liegeeinsatz nach der Figur 1, bei dem die Oberlage zur Seite weggeklappt ist.

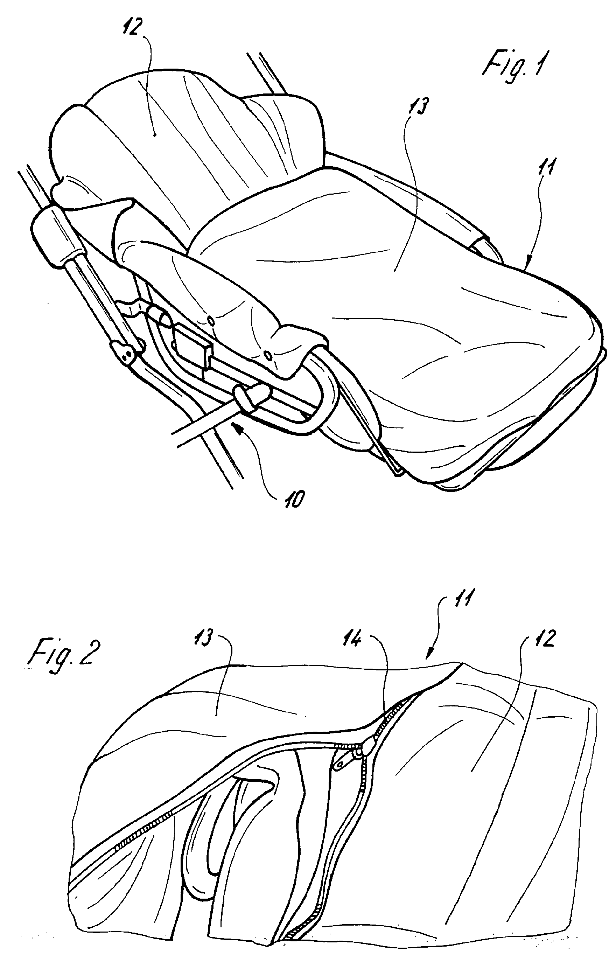

Aus Darstellungsgründen ist in der Figur 1 nur der obere Bereich des Kinderwagens 10 dargestellt, der den Sitz- und/oder den Liegeeinsatz 11 aufnimmt. Der Sitz- und Liegeeinsatz 11 ist mit einer Oberlage 13 ausgestattet, die ebenfalls mit einer Füllung versehen ist, und die flächenmäßig kleiner gehalten ist, so daß der Kopf des Kindes und ggf. noch die Schulterpartien frei bleiben. Die Randkanten der Oberlage 13 sind mit den Randkanten des Unterteils 12 durch einen Reißverschluß 14 miteinander verbunden, so daß die Oberlage 13 in einfachster Weise ausgewechselt werden kann. Dies ist beispielsweise zur Reinigung notwendig oder wenn ein Austausch aufgrund der Außentemperaturen notwendig ist. In nicht näher dargestellter Weise ist der Reißverschluß innen und außen durch eine Wulst abgedeckt, so daß er unsichtbar ist, Kältebrücken vermieden und eine Verletzungsgefahr des Kindes ausgeschlossen werden kann. In nicht näher dargestellter Weise könnte insbesondere bei winterlichen Temperaturen in dem von den Unterteil 12 und der Oberlage 13 begrenzenden taschenartigen Innenraum ein Fußsack eingesteckt werden.

## Patentansprüche

1. Sitz- und/oder Liegeeinsatz (11) mit einem Kopf- und Fußendbereich für einen Kinderwagen (10), welcher zumindest ein Unterteil (12) aufweist, **dadurch gekennzeichnet, daß** der Sitz- und/oder der Liegeeinsatz (11) im Fußteilbereich über eine definierte Fläche mit einer Oberlage (13) ausgestattet ist, die mit dem Unterteil (12) verbunden ist.

2. Sitz- und/oder Liegeeinsatz nach Anspruch 1, dadurch gekennzeichnet, daß die Seitenkanten der Oberlage (13) mit den zugehörigen Seitenkanten des Unterteils (12) zusammenfallen oder annähernd zusammenfallen.

3. Sitz- und/oder Liegeeinsatz nach Anspruch 1 oder 2, dadurch gekennzeichnet, daß die Seitenkanten der Oberlage (13) mit den zugehörigen Seitenkanten der Unterlage (12) lösbar miteinander verbunden sind.

4. Sitz- und/oder Liegeeinsatz nach einem oder mehreren der vorhergehenden Ansprüche 1 bis 3, dadurch gekennzeichnet, daß die Seitenkanten der Oberlage mit den Seitenkanten des Unterteils (12) durch einen Reißverschluß oder durch mehrere Reißverschlüsse miteinander verbunden sind.

5. Sitz- und/oder Liegeeinsatz nach einem oder mehreren der vorhergehenden Ansprüche 1 bis 4, dadurch gekennzeichnet, daß der Reißverschluß (14) innen- und/oder außenseitig von je einer Wulst übergriffen ist.
